Europäisches Patentamt

European Patent Office

Office européen des brevets

(11) Publication number: **0 476 228 A1**

# EUROPEAN PATENT APPLICATION

(21) Application number: **91106881.5**

(22) Date of filing: **27.04.91**

(51) Int. Cl.5: **H01Q 15/14, B29C 45/56**

(30) Priority: **20.08.90 JP 218326/90**
**02.11.90 JP 298200/90**

(43) Date of publication of application:
**25.03.92 Bulletin 92/13**

(84) Designated Contracting States:
**DE FR GB**

(71) Applicant: **Bridgestone Corporation**
**10-1, Kyobashi 1-Chome Chuo-Ku**
**Tokyo 104(JP)**

(72) Inventor: **Tanaka, Akihiko**
**562-6 Shinano-cho, Totsuka-ku**
**Yokohama-shi, Kanagawa(JP)**
Inventor: **Kanayama, Tatsuya**
**Gumisawa, Totsuka-ku**
**Yokohama-shi, Kanagawa(JP)**
Inventor: **Toyoda, Hitoshi**
**5-2-29, Azuma-cho**
**Iruma-shi, Saitama(JP)**

(74) Representative: **Fuhlendorf, Jörn, Dipl.-Ing. et al**
**Patentanwälte Dreiss, Hosenthien &**
**Fuhlendorf Gerokstrasse 6**
**W-7000 Stuttgart 1(DE)**

(54) **Reflector and method of and apparatus for fabricating the same.**

(57) A conducting reflective material (12) serving as a reflective member of a reflector and a fiber-compounded thermosetting resin serving as a back support member (10) are poured into a mold comprised of a core mold (18) and a cavity mold (19) for molding the reflector, so as to form a resin molded material as an integral unit under heat and pressure. Thereafter, the mold is released from being pressurized, or subjected to a reduction in pressure. Then, a thermosetting resin (20) for forming a surface protective layer is injected between the surface of the core mold and the resin molded material, and the contents of the mold are subjected to heat and pressure again, so as to integrally form a reflector comprising the respective resins referred to above and the reflective material. As a consequence, the number of steps required for charging the mold with the resin used to form the surface protective layer can be reduced and unwanted variation in color can be prevented. In addition, the surface protective layer on the reflective surface of the reflector can be uniformly formed.

FIG. 2

EP 0 476 228 A1

## BACKGROUND OF THE INVENTION

### Field of the Invention

The present invention relates to a reflector used to reflect a microwave or the like, which is available for satellite broadcast reception, transmission and reception executed through a communication satellite, and radiocommunication via repeaters or relay stations; and a method of fabricating this reflector; and particularly to a reflector made of a synthetic resin which takes into consideration that a surface protective layer is formed thereon; and a method of fabricating this reflector.

### Description of the Related Art

As parabolic antenna reflectors, there are often used those made principally of synthetic resins at present. However, the reflectors have weather-resistant resins formed on the surface thereof, with attractive colors being applied thereto.

As methods for forming surface protective layers, there are proposed the following three kinds.

First of all, as the first method, there is proposed one in which a conductive bonded-fiber fabric, a wire fabric or an aluminum foil with one of its sides subjected to adhesive processing and an SMC (sheet molding compound) are molded under heat and compression to form a single unit, followed by removing the desired molding of the single unit from the mold and then subjecting it to sanding and thereafter to post-painting by spraying or the like.

However, this method requires the provision of facilities for the painting process. It is also necessary in this method to perform primer painting or sanding processing in order to ensure the adhesive properties of the outermost coating, thus causing an increase in entire cost.

As the second method, there is known one in which SMCs are integrally molded under heat and compression with a wire fabric or the like held therebetween so as to form a protective layer thereon. However, this makes it difficult to make the surface of the resultant product flat due to sink marks produced at the time of molding of the resin or the like. In addition, accuracy of molding in the effective area of the reflective member is rendered poor.

Further, as the third method, there is proposed one in which a weather-resistant resin film serving as a surface protective layer is superposed on the above-mentioned SMC to make the two into a single unit. It is, however, necessary to pre-form the resin film in the shape of a reflector, and hence the number of operational steps is greatly increased.

There is also often a case where the front and reverse sides of the reflector are set in colors different from each other. However, in the first method, a long period of time is required for masking, and in the second method there is a difficulty in technique. Further, the third method is undesirable in light of design considerations because a boundary is made between the edge of the resin film (on which aluminum foil is superposed) and the SMC serving as a back support member at a flange portion of the reflector.

As an alternative to those methods, there is proposed a fourth method in which a conductive bonded-fiber fabric or a wire fabric is superposed on an SMC to form a single unit, which is in turn molded under heat and pressure to thereby produce a molding and thereafter the one of the two upper and lower molds which is on the reflective surface side of the molding is opened, and a thermosetting resin serving as a surface protective layer is applied to the surface of the resultant molding, followed by the closing of the molds again and subjecting of the molding to heating and pressure again, thereby forming a surface protective layer (see Japanese Patent Application Laid-Open No. 61-4304).

However, according to this method, the mold on the reflective surface side is fully opened, and hence the cavity defined by the upper and lower molds is exposed to the air, temporarily releasing the molding from being sealed inside the mold. Therefore, foreign material such as burrs of resin formed around the resultant molding drop on the outersurface of newly coated reflector, thereby causing damage to the surface thereof.

The resin to be put onto the surface of the resultant molding also has a problem in that variation in the shade of color is developed when the application of heat to the resin is poor.

## SUMMARY OF THE INVENTION

With the foregoing in view, it is an object of the present invention to provide a further improvement in the fourth method, capable of providing superb design properties and the lowest possible manufacturing cost; and to provide a reflector having a surface protective layer uniformly formed thereon and serving as a reflective surface of the reflector, by using a method having a reduced number of steps, in which the concave surface of the reflector is charged with a resin for formation of a surface protective layer, and in which prevention of variation in color shading is ensured; and also a method of fabricating the reflector.

According to one aspect of the present invention, there is provided a method of fabricating a reflector, which comprises the following five steps:

a first step of pouring a conducting reflective material to form the reflective member of the reflector, and a fiber-compounded thermosetting resin to form a back support member, into a mold comprised of a core mold for forming the reflective surface of the reflector and a cavity mold used to form the surface of a back support member of the reflector and corresponding to the core mold, a second step of integrally forming the conducting reflective material and the fiber-compounded thermosetting resin under heat and pressure to produce a resin molded material, a third step of releasing the cavity mold from being subjected to the pressure applied thereto or reducing the pressure applied to the cavity mold, a fourth step of injecting a thermosetting resin to form a surface protective layer between the inner surface of the core mold and the resin molded material, and a fifth step of heating and pressurizing the thermosetting resin of the fourth step to mold the surface protective layer on the reflective surface of the reflector.

According to the present invention, when the resin serving as the surface protective layer is injected into the cavity, the cavity mold is released from being under pressure. At this point, the present invention employs either of two methods as the releasing method. In one method, the core mold and the cavity mold are separated by a slight interval or clearance so as to create a space between the molding and the inner surface of the core mold, and in other method, the two molds are not separated, and the amount of pressure applied during molding is lowered only enough to pressure-inject the resin under high pressure so as to create the surface protective layer by forcing it between the molding and the inner surface of the core mold. In the former method, the pressure is reduced to zero or below whereas in the latter method the pressure is lowered to a level at which the resin may be pressure-injected into the clearance without reducing the pressure to zero. In either case, the cavity defined between the core mold and the cavity mold is kept in a sealed state and hence the molding is not exposed to the air.

In the case of the former approach, it is desirable to temporarily lift up the upper mold. Therefore, the former preferably has a cylinder for forcing the upper mold in the opposite direction from the direction from which the pressure drop is applied by a press. In this first case, a low pressure of 150 kg/cm$^2$ or below supplied from a nitrogen cylinder or the like is satisfactory for the injection of the resin into the clearance space formed by separating the molds, and the resin is supplied to the inside of the cylinder by a static mixer. The resin is pressure-injected into the mold by opening and closing a shut-off pin of an injector, which is attached to the mold through a thermal insulating board or a cooling zone.

On the other hand, in the latter approach the pressure applied for the molding is reduced at the time of the resin injection. It is however necessary to provide a high pressure of from 100 kg/cm$^2$ to 400 kg/cm$^2$, considerably higher than the mold clamping pressure, by adding pressure of from 30 kg/cm$^2$ to 100 kg/cm$^2$ because the resin is pressure-injected into the mold when the mold is in a closed state. An accumulator is actuated to produce the high pressure, which is in turn introduced into the cylinder of an injector.

In either case, it is most suitable to define an injection slot for injecting the resin used to form the surface protective layer into the mold, in the center of the mold area formed on the mold in order to uniformly mold the resin on the reflective surface of the reflector.

However, when the injection slot for forming the reflective surface of the reflector is defined in the center of the core mold, there is produced a resin-injected trace on the reflective surface of the reflector upon molding the reflector. Therefore, there is adopted a method of providing one or two tubs at an edge of the mold for pressure-injecting the resin thereinto so as to better apply the same onto the reflective surface from the tubs.

In this case, protrusions of resin on the molded reflector due to the tubs are cut off after the reflector is taken out of the mold.

The amount of application of the resin onto the reflective surface depends on the size of the reflector. However, a film ranging in thickness from 30μm to 300μm is obtained, with 50μm to 150μm being preferred as a satisfactory film.

In general, a reflector made of a synthetic resin has a flange portion formed at its periphery. In addition, the flange portion has a boundary defined between the end of the reflective member and the resin forming the back support member. However, the flange portion also has a surface protective layer to cover the boundary. The flange portion preferably opens outwardly at angles of 3° to 30° with respect to the direction in which the reflector is drawn. In general, the flange portion preferably has an angle of 10° or greater at which it is opened outwardly. The reason for this is that when the opening angle is less than 3°, the surface protective layer becomes too thin and the covering capability of the conducting reflective material is reduced, and when the opening angle exceeds 30°, warpage is liable to be produced in the paraboloid shape of the reflector, thereby making the accuracy of the reflector in the paraboloid area poor, and also, this angle is not preferred for reasons of design.

The above and other objects, features and advantages of the present invention will become apparent from the following description and the appended claims, taken in conjunction with the accompanying drawings in which preferred embodiments of the present invention are shown by way of illustrative example.

## BRIEF DESCRIPTION OF THE DRAWINGS

FIG. 1 is a partial cross-sectional view of a reflector fabricated by a reflector fabrication method according to each of the first to fourth embodiments;

FIG. 2 is a diagram schematically showing a reflector fabrication apparatus applied to each of the first and third embodiments;

FIG. 3 is a diagram schematically illustrating a reflector fabrication apparatus applied to each of the second and fourth embodiments;

FIG. 4 is a partial cross-sectional view of a reflector fabricated by a reflector fabrication method according to a fifth embodiment; and

FIG. 5 is a diagram schematically showing a reflector fabrication apparatus applied to the fifth embodiment.

## DETAILED DESCRIPTION OF THE PREFERRED EMBODIMENTS

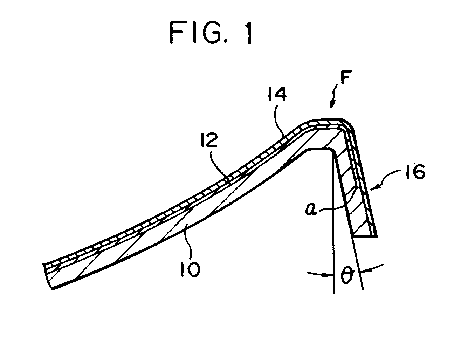

FIG. 1 is a partial cross-sectional view of a reflector fabricated by a reflector fabrication method according to each of the first to fourth embodiments. A back support member 10 as a basic member of a reflector has a surface on which a conducting reflective material 12 is formed. Further, the reflective material 12 has a surface protective layer 14 formed on the surface thereof. The back support member 10, the conducting reflective material 12 and the surface protective layer 14 have their peripheries continuously connected, through a flat region F, to a flange portion 16 bent at an acute angle from the flat region F. Since the region F is flat, the flange portion 16 of the reflector is not bent at an acute angle. Therefore, the surface protective layer 14 can smoothly be formed.

As is understood from FIG. 1, a boundary "a" between the back support member 10 and the conducting reflective material 12 is defined in the flange portion 16 of the reflector. However, the boundary "a" is covered with the surface protective layer 14. Incidentally, the flange portion 16 has a configuration opening outwardly at an inclined angle $\theta$ with respect to a perpendicular line extending from the outer edge of the flat region F.

[Reflector fabrication method of the first embodiment]

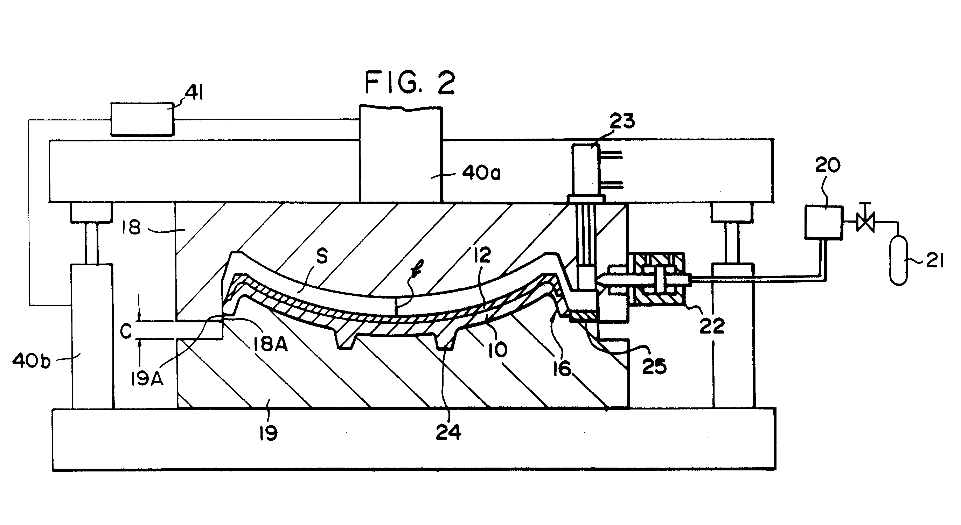

FIG. 2 shows a core mold 18, a cavity mold 19 and various devices attached thereto, all of which are employed in a reflector fabrication method according to the first embodiment. In FIG. 2, there are shown a resin supply device 20, a pressurizing nitrogen cylinder 21, an injector 22 and a shut-off cylinder 23.

The core mold 18 has a configuration engraved thereon for forming the reflective surface of the reflector. In the same manner, the cavity mold 19 has a configuration engraved thereon for forming the back support surface of the reflector. A cavity S is defined between the core mold 18 and the cavity mold 19. Designated at numeral 24 in FIG. 2 are bosses each used to mount the reflector. Nuts of M6 are inserted into the respective bosses. The cavity mold 19 is provided with a tub 25 as a resin reservoir at the end of a flange portion 16 thereof.

A brass woven metallic wire (wire diameter $150\mu$m x 24-in mesh) was used as the electromagnetic-wave reflecting conductive material 12, and 1 kg of sheet molding compound containing glass in an amount of 24% by weight was measured for the back support member 10, followed by superposition of the electromagnetic-wave reflecting conductive material 12 on the back support member 10.

The electromagnetic-wave reflecting conductive material 12 and the material for the back support member 10 were introduced into the core mold 18 and the cavity mold 19 respectively, to make a 45-type offset reflector, and molded under heat and pressure at a molding temperature of 140°C for about 90 seconds under a mold clamping pressure of 100 tons. Thereafter, hydraulic cylinders 40a, 40b disposed in a press were activated to define an interval b of about 2mm between the reflector side surface of the molding and the core mold 18. The hydraulic cylinders 40a, 40b provide mold clamping pressure controlled by a control device 41.

Under this condition, about 30 cc of 1-liquid system urethane resin (obtained by adding a peroxide as a curing agent and a catalyst to urethane resin comprised of an acrylicpolyol, a non-yellowing isocyanate and a toner) supplied from the resin supply device 20 was measured with an injector 22. Then, the shut-off cylinder 23 was opened to pour the measured resin into the tub 25 under a pressure of about 50 kg/cm$^2$ by making use of gas pressure from the pressurizing nitrogen cylinder 21. After the measured resin was injected into the tub 25, the pressure in the hydraulic cylinders 40a, 40b was reduced and the measured resin was subjected to a ram pressure of 100 tons by the press again, and thereafter molded under heat and pressure at a molding temperature of 140°C for about 90 seconds.

The resin in the tub 25 is abruptly moved to the surface of the reflective material 12 by the applied pressure used in the above. Since the flange portion 16 is inclined by an angle $\theta$ (see FIG. 1), a sufficient supply of resin from the tub 25 is ensured provided that the edges of the core mold 18 and the cavity mold 19 are spaced slightly away from each other, so as to create a small space between the core mold 18 and the reflective surface of the molding.

The resultant reflector was a satisfactory product having a film thickness of about 120$\mu$m at the reflective surface thereof and of about 30$\mu$m at the flange portion 16, with the product having an excellent appearance, with a gray color (N8.0) and being free of variation in color shading.

Incidentally, the interval b is shown in an enlarged view in FIG. 2. In addition, the interval between the core mold 18 and the cavity mold 19 is defined so as not to exceed a separation distance (i.e., travel C in FIG. 2). Since the flange portion 16 has an angle of $\theta$ = about 5°, a surface protective layer is formed even on the surface of the flange portion 16 as is seen from FIG. 1. Further, since the surfaces of the core mold 18 and the cavity mold 19, which abut at the respective edges thereof, remain in contact along respective perpendicular surfaces thereof, they are kept in a sealed state and there is no possibility of foreign materials entering between the abutting surfaces.

[Reflector fabrication method of the second embodiment]

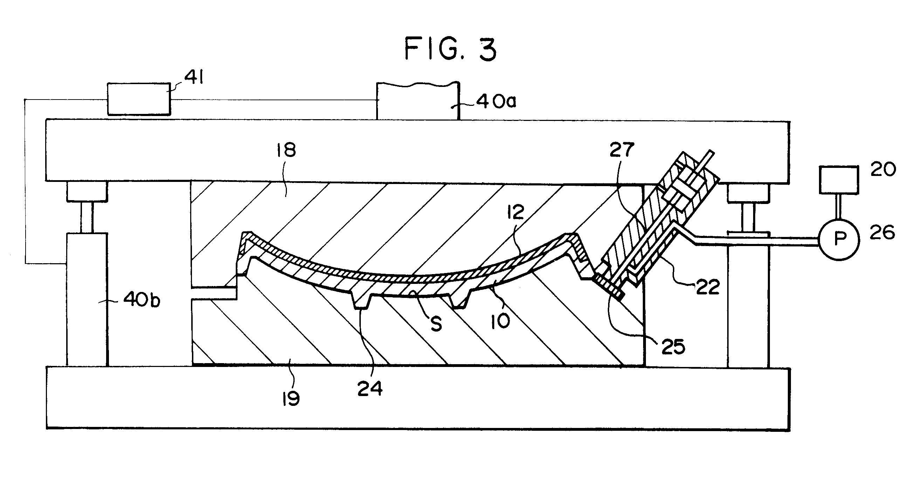

FIG. 3 shows a core mold 18, a cavity mold 19 and various devices attached thereto, all of which are employed in a reflector fabrication method according to the second embodiment.

Referring to FIG. 3, numeral 26 indicates a high-pressure pump and numeral 27 indicates a shut-off pin. Other parts are identical to those employed in the first embodiment.

Similarly to the first embodiment, a brass woven metallic wire as a conducting reflective material 12 and an SMC as a back support member 10 were superposed on each other to produce a single laminate, and the laminate thus produced was introduced into the core mold 18 and the cavity mold 19 for a 45-type reflector. The cavity mold 19 is provided in advance with a tub 25 which is about 25mm-square, into which the shut-off pin 27 is inserted. In the same manner as in the first embodiment, the laminate thus processed was molded under heat and pressure at a molding temperature of 140°C for about 80 seconds under a mold clamping pressure of 100 tons, followed by releasing of the mold clamping pressure without opening either the core mold 18 or the cavity mold 19.

Under this condition, about 40 cc of resin was measured by an injector 22. Resin suppled from a resin supply device 20 was injected into the tub 25 under a hydraulic pressure of about 300 kg/cm$^2$ by the high-pressure pump 26. As a result, the core mold 18 was lifted up by the pressure of the supplied resin. After the resin was injected into the mold, it was subjected to a mold clamping pressure of 100 tons again, and thereafter molded under heat and pressure for about 90 seconds.

The resultant reflector was covered with a satisfactory protective layer with a light-gray color, which had a film thickness of about 120$\mu$m at the reflective surface thereof and that of about 40$\mu$m at a flange portion.

[Reflector fabrication method of the third embodiment]

Similarly to the first embodiment, a brass woven metallic wire as a conducting reflective material 12 and an SMC as a back support member 10 were superposed on each other to produce a single laminate. Then, the resultant laminate was introduced into a core mold 18 and a cavity mold 19 for a 75-type offset reflector having a flange angle of $\theta$ = 30°, and thereafter molded under heat and pressure at a molding temperature of 140°C for about 120 seconds and under a mold clamping pressure of 400 tons. Then, each of the hydraulic cylinders 40a, 40b controlled by a control device 41 disposed in a press was activated to define an interval of about 2mm between the core mold 18 and the cavity mold 19, followed by injection of about 140 cc of a 1-liquid system urethane resin into the space thus formed between the core mold 18 and the surface of the molding. After the resin was injected thereinto, the thus-processed laminate was heated and pressurized again at a molding temperature of 140°C for about 90 seconds under a mold clamping pressure of 300 tons. The resultant reflector was covered with a fine protective layer having a film thickness of about 140$\mu$m at the reflective surface thereof and of about 80$\mu$m at a flange portion.

[Reflector fabrication method of the fourth embodiment]

In the same manner as in the second embodiment, a brass woven metallic wire as a conducting reflective material 12 and an SMC as a back support member 10 were superimposed on each other to produce a single laminate. Then, the resulting laminate was charged into a core mold 18 and a cavity mold 19 for a 35-type offset reflector having a flange angle of $\theta$ = 12°. Thereafter, it was heated and pressurized at a molding temperature of 150°C for about 70 seconds under a mold clamping pressure of 70 tons, followed by releasing of the applied mold clamping pressure without opening either the core mold 18 or the cavity mold 19.

Under this condition, about 25 cc of a white-colored resin was injected into a tub by an injector 22 under a high pressure of about 300 kg/cm². After the resin was injected into the mold, it was molded under heat and pressure again. The resultant reflector was covered with a fine, white protective layer having superb covering power, which had a film thickness of about 120μm at the reflective surface thereof and of about 50μm at the flange portion.

[Reflector fabrication method of the fifth embodiment]

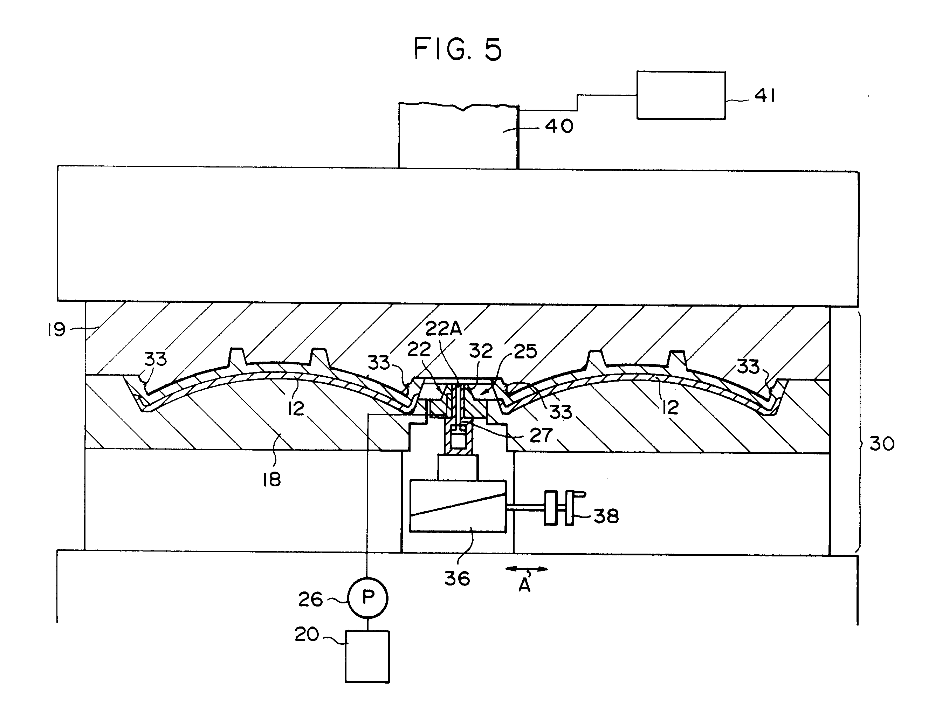

In the reflector fabrication method according to the fifth embodiment as shown in FIG. 5, a mold 30 having cavities which are defined in two pairs by a core mold 18 and a cavity mold 19 to make it possible to perform double chamfering, is used.

The mold 30 has a tub 25 disposed in the central portion thereof. A resin, which is pressure-injected into the tub 25, is uniformly applied to a reflective surface of a reflector.

The tub 25 has a cone-shaped injection slot 32 defined centrally therein, which is tapered so as to have a small diameter toward the end of the cavity mold 19. The leading end 22A of the injector 22 for injecting a resin as the material of a surface protective layer 14 is inserted into the injection slot 32. The leading end 22A thereof corresponds to the configuration of the injection slot 32 and is tapered so as to have a cone shape. The positioning of the leading end 22A at the time of inserting the same in the injection slot 32 can easily be performed, and the leading end 22A can easily be introduced into and removed from the injection slot 32. Incidentally, the leading end 22A is freely opened and/or closed by a shut-off pin 27 attached to the injector 22.

A resin, which is supplied from a resin supply device 20 and subjected to high pressure by a high-pressure pump 26, is introduced into the injector 22.

Incidentally, a tapered block 36 is mounted on the lower surface of the injector 22 to facilitate the introduction of the leading end 22A of the injector 22 into the injection slot 32 and removal of the same therefrom. The tapered block 36 is movable in the left and right directions (indicated by the arrow A) as seen in the drawing, by turning a handle 38. Thus, the injector 22 can easily be moved upward and downward by a wedge effect.

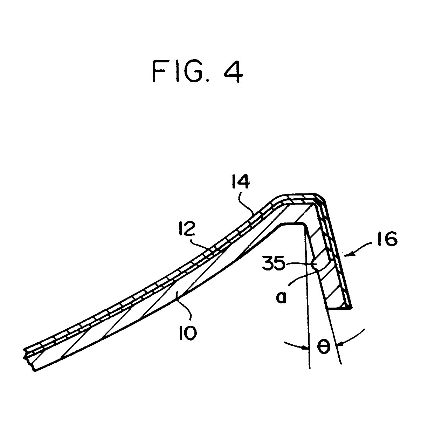

Each of the hydraulic cylinders 40a, 40b is mounted on the outside of the cavity mold 19, and the pressure to be applied by each of the hydraulic cylinders 40a, 40b is controlled by a control device 41. The reflector mold 30 can be placed under pressure and vacuum by actuating the hydraulic cylinders 40a, 40b. Further, the flange portion 16 of the reflector on the side of the cavity mold 19 has undercuts 33 on the order of 0.5mm in depth and 5mm in diameter, which are defined in several points along the circumferential surface thereof. When the reflector mold 30 is placed under pressure and vacuum, the molding can reliably be held onto the cavity mold 19 due to the undercuts 33. Thus, each of the molded reflectors is formed with a projection 35 by each of the undercuts 33 as shown in FIG. 4.

As shown in FIG. 5, an ellipse-shaped brass woven metallic wire as a conducting reflective material 12 and 1 kg of an SMC as a back support member 10 are superposed on each other to produce a single laminate. The resultant laminate is introduced into both the cavity mold 19 and the core mold 18 of the two-chamfer type mold 30 capable of forming two 45-type reflectors.

Then, the molding temperature is set to 150° C by heating, and thereafter the so-introduced laminate is molded under heat and pressure for 60 seconds, at that molding temperature under a mold clamping pressure of 160 tons by each of the hydraulic cylinders 40a, 40b. Thereafter, the pressure applied to the laminate by the hydraulic cylinders 40a, 40b is released, followed by the release of the applied mold clamping pressure from the mold 30, without opening the mold 30. Incidentally, the mold clamping pressure may be reduced to the level at which the resin is injected into the mold 30. However, it is preferably reduced to zero.

Under this condition, about 80 cc of a resin, which is supplied from the resin supply device 20 and subjected to high pressure by the high-pressure pump 26, is pressure-injected into the injection slot 32 defined in the tub 25, from the injector 22 under a high pressure of about 300 kg/cm². The cavity mold 19 is lifted up by the pressure applied to the resin.

Since the injection slot 32 is defined in the center of the mold 30, the pressure applied to the resin is exerted on the center of gravity of the mold 30. Thus, the center of the mold 30 is not opened wide, and the cavity mold 19 is lifted up in parallel to the core mold 18 by the pressure applied to the resin, so that the resin is uniformly spread over the reflective surface 12.

After the resin has been injected, it is subjected again to a mold clamping pressure of 240 tons by the hydraulic cylinders 40a, 40b and thereafter molded under heat and pressure for about 60 seconds. Finally, the mold is opened to remove the molding of the reflector from the mold 30, and thereafter a protrusion due to the resin tub is cut off from the thus-removed molding, thereby completing the production of the reflector.

The two-chamfer type mold 30 having both a core mold 18 and a cavity mold 19 is used in the fifth embodiment. However, a three-chamfer type or four-chamfer type mold 30 may be used provided that the tub 25 is provided at the center of the mold 30.

Brass woven metallic wire is used as the conducting reflective material 12 in the first to fifth embodiments. As an alternative to the wire, a woven material comprised of conductive fibers such as aluminum-coated glass, a carbon fiber, a nickel-plated polyester, a nickel-plated glass, etc, or a bonded-fiber fabric, or a woven metallic wire comprised of metal fibers such as an aluminum wire, a galvanized iron wire, etc., or a woven material mixed with a metal wire and glass may be used. These materials can be punched to size and superposed on a thermosetting resin sheet to form an integral unit.

As a bonding layer, a laminated foil preformed by superposing a hot-melt film such as a modified polyolefin nylon type, a urethane type, an ethylenevinyl acetate copolymer, etc. or a double-side processed polyvinyl fluoride film or the like, on an aluminum foil may also be used.

Further, SMC (sheet molding compound) has been used as the back support member 10. However, as an alternative to the SMC, a BMC (bulk molding compound), a TMC (thick molding compound), or a glass cloth-prepreg, etc. may be used.

Incidentally, when a woven material comprised of a glass fabric, a polyester fabric, a vinylon fabric, etc. or a bonded-fiber fabric is interposed between the conducting reflective material 12 and the back support member 10 as needed, it is effective in preventing the reflective material 12 from becoming irregular or damaged.

On the other hand, as the surface protective layer 14, setting resins such as urethane, polyester, vinyl ester and epoxy types, or resins obtained by modifying these setting resins, or resins mixed with the same can be used.

In the reflector fabrication method of the present invention herein described, the surface protective layer can reliably be formed even on the flange portion as well as on the paraboloid reflecting surface, without introduction of foreign materials onto the most important receiving surface of the reflector.

A surface protective layer having excellent adhesive properties and serviceability can be formed with one coating without primary coat processing or a primer, thereby making it possible to produce a reflector which is inexpensive and excellent in design.

Further, the surface protective layer can be formed uniformly on the reflective surface of the reflector because the junction surface where the reflective surface of the reflector and the core mold meet is pushed open in parallel under pressure at the time of injection of the resin. As a result, the reflective surface of the reflector is formed as a thin surface protective layer, so that irregularities in appearance such as flow marks are no longer produced. When the mold is released from being under pressure or subjected to a reduction in the pressure applied thereto immediately before the resin is injected into the mold, the molding is supported on the cavity mold by the undercuts defined in the cavity mold even when a non-shrinking SMC is used. Therefore, the resin can be reliably applied to the surface of the junction where the reflective surface of the reflector and the core mold meet.

Furthermore, since the injection slot defined in the tub is shaped in the form of a cone, and the leading end of the injector inserted into the injection slot is also shaped in the form of a cone, the leading end thereof is easily introduced into and removed from the injection slot, and hence this arrangement is convenient for the purpose of maintenance.

Having now fully described the invention, it will be apparent to those skilled in the art that many changes and modifications can be made without departing from the spirit or scope of the invention as set forth herein.

## Claims

1. A method of producing a reflector, said method being suitable for use in an apparatus for fabricating said reflector by using a core mold to form a reflective surface of said reflector and a cavity mold to form a back support surface of said reflector and corresponding to said core mold, said method comprising the following five steps:

   a first step of pouring a conducting reflective material for a reflective member of said reflector and a fiber-compounded thermosetting resin for a back support member into a mold comprised of said core mold for forming said reflective surface of said reflector and said cavity mold for forming said back support surface of said reflector and corresponding to said core mold;

   a second step of integrally forming within said mold said conducting reflective material and said thermosetting resin under heating and pressure to produce a resin molded material;

   a third step of releasing said cavity mold from being subjected to pressure applied thereto or reducing said pressure applied to said cavity mold;

a fourth step of injecting a thermosetting resin to form a surface protective layer between the inner surface of said core mold and said resin molded material; and

a fifth step of heating and pressurizing said thermosetting resin of said fourth step so as to mold said surface protective layer on said reflective surface of said reflector.

2. A method according to Claim 1, wherein said third step is performed in such a way as to prevent said mold from opening beyond a defined interval between said core mold and said cavity mold.

3. A method according to Claim 1, wherein a hydraulic cylinder is actuated in said third step to open said cavity mold so as to precisely define a predetermined small interval between said core mold and said cavity mold.

4. A method according to Claim 1, wherein said fourth step is performed by deactivating a shut-off cylinder which temporarily prevents said thermosetting resin from being injected out of an injector, so as to enable injection of said thermosetting resin into said mold.

5. A method according to Claim 1, wherein said core mold is lifted up by the pressure used to inject said thermosetting resin between the surface of said core mold and said resin molded material in said fourth step.

6. A method according to Claim 1, wherein said cavity mold has a tub serving as a resin reservoir formed in an end of a flange thereof.

7. A method according to Claim 1, wherein a projection formed on said reflector during molding, due to supplying resin from said tub is cut off.

8. A method according to Claim 1, wherein a plurality of reflectors are produced by making said core mold and said cavity mold plural, so as to form a multiple mold having a plurality of cavities defined between said plurality of core molds and cavity molds corresponding to said core molds, and using said multiple mold to simultaneously form a plurality of reflectors, and then, in said fourth step pressure-injecting said thermosetting resin serving as said surface protective layer between said inner surface of said core mold and said resin molded material, from an injection opening at the center of said mold.

9. A method according to Claim 8, wherein two cavities are defined between said plurality of core molds for molding the reflective surfaces of said plurality of reflectors, and said cavity molds used to form back support surfaces of said reflectors and corresponding to said core molds so as to produce a mold for simultaneously molding two reflectors.

10. A method according to Claim 8, wherein the pressure-injection of said thermosetting resin in said fourth step is performed via a tub serving as a resin reservoir formed centrally in said multiple mold.

11. A method according to Claim 8, wherein said injector for injecting said thermosetting resin in said fourth step is inserted into said tub by a wedge effect produced by a tapered block.

12. A method according to Claim 8, wherein said third step is performed so as to prevent said multiple mold from being opened beyond a defined interval between each of said core molds and each of said cavity molds, respectively.

13. A method according to Claim 8, wherein said hydraulic cylinder is actuated in said third step to open each of said cavity molds so as to precisely define a predetermined small interval between each of said core molds and each of said cavity molds, respectively.

14. A method according to Claim 8, wherein said fourth step is carried out by deactivating a shut-off cylinder which temporarily prevents said thermosetting resin from being injected out of said injector, so as to enable injection of said thermosetting resin into said multiple mold.

15. A method according to Claim 8, wherein each of said core molds is lifted up by the pressure used to inject said thermosetting resin between the surface of each of said core molds and said resin molded material in said fourth step.

16. An apparatus for fabricating a reflector suitable for use in satellite broadcast reception, said apparatus comprising:

pressing means for performing an increase or decrease in pressure inside a mold comprised of a core mold used to form a reflective surface of said reflector, a cavity mold used to form a back support surface of said reflector and corresponding to said core mold, said pressure acting on a laminate formed by superposing layers of material between said core mold and said cavity mold; and

resin injecting means for injecting resins into a mold cavity defined between said core mold and said cavity mold.

17. An apparatus for fabricating a reflector, characterized in that undercuts are defined in a cavity mold so as to support a molding of said reflector on said cavity mold.

18. A reflector suitable for use in satellite broadcast reception characterized in that a flange portion extending from a paraboloid of said reflector used to reflect electromagnetic waves to the outer peripheral edge of said reflector is formed, and a surface protective layer of said reflector is formed so as to extend over said flange portion.

19. A reflector according to Claim 18, wherein said flange portion has a flat region defined therein.

20. A reflector according to Claim 18, wherein the angle at which said flange portion is folded with respect to the vertical direction in FIG. 1 is from 3° to 30°.

# FIG. 1

FIG. 2

FIG. 3

EP 0 476 228 A1

FIG. 4

FIG. 5

EP 0 476 228 A1

European
Patent Office

EUROPEAN SEARCH
REPORT

Application Number

EP 91 10 6881

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | PATENT ABSTRACTS OF JAPAN vol. 10, no. 141 (E-406)(2198), 24 May 1986; & JP - A - 61004304 (BRIDGESTONE) 10.01.1986 — — — | 1,16-18 | H 01 Q 15/14 B 29 C 45/56 |
| Y | DE-A-2 753 870   (GENERAL MOTORS) * figure 1; claim 1 * — — — | 1,16-18 | |
| A | PATENT ABSTRACTS OF JAPAN vol. 11, no. 292 (E543-2739), 19 September 1987; & JP - A - 62090003 (SEKISUI CHEM) 24.04.1987 — — — | 1 | |
| A | US-A-4 184 836   (H. REES) * figure 1; abstract * — — — | 8 | |
| A | US-A-4 030 953   (J.F. RUTSCHOW et al.) * figure 5; abstract * — — — | | |
| A | DE-A-2 821 375   (PHILIPS) * figures 1,2; claims 1,5,7 * — — — | | |
| A | PATENT ABSTRACTS OF JAPAN vol. 9, no. 251 (E-348)(1974), 8 October 1985; & JP - A - 60100803 (TAKEDA YAKUHIN KOGYO) 04.06.1985 — — — | | |
| A | PATENT ABSTRACTS OF JAPAN vol. 9, no. 19 (E-292)(1742), 25 January 1985; & JP - A - 59167103 (YASHIRO KAKOU) 20.09.1984 — — — — — | | |

TECHNICAL FIELDS
SEARCHED (Int. Cl.5)

H 01 Q
B 29 C

The present search report has been drawn up for all claims

| Place of search | Date of completion of search | Examiner |
|---|---|---|
| Berlin | 15 November 91 | BREUSING J |